# EUROPÄISCHE PATENTSCHRIFT

(11) **EP 3 794 927 B1**
(45) Veröffentlichungstag und Bekanntmachung des Hinweises auf die Patenterteilung: **28.08.2024**
(21) Anmeldenummer: 20180833.4
(22) Anmeldetag: 18.06.2020
(51) Int. Cl.: A01D 41/127, A01B 63/00, G02B 27/01

(54) **LANDWIRTSCHAFTLICHE ARBEITSMASCHINE**
AGRICULTURAL MACHINE
MACHINE DE TRAVAIL AGRICOLE

(30) Priorität: 17.09.2019 DE 102019125024
(43) Veröffentlichungstag der Anmeldung: 24.03.2021
(73) Patentinhaber: CLAAS Tractor SAS, 78141 Vélizy-Villacoublay Cedex (FR)
(72) Erfinder: Bohl, Arne, 33330 Gütersloh (DE)
(74) Vertreter: CLAAS Gruppe

(56) Entgegenhaltungen:
- EP-A1- 1 674 324
- DE-A1- 102015 115 883
- US-A1- 2015 294 169
- US-A1- 2016 001 781
- US-A1- 2017 274 906

## Beschreibung

Die vorliegende Erfindung betrifft eine landwirtschaftliche Arbeitsmaschine gemäß dem Oberbegriff des Anspruches 1.

Für Fahrzeuge, insbesondere Personenkraftwagen, ist es bekannt, eine ein Head-up-Display umfassende Anzeigevorrichtung zu verwenden, um Bilder auf eine Windschutzscheibe zu projizieren. Hierzu sind an dem Fahrzeug optische Sensoreinheiten zur Erfassung der Umgebung angeordnet, die mit einer Steuereinheit in Wirkverbindung stehen. Eine in der Fahrgastzelle angeordnete optischen Anzeigevorrichtung dient der Projizierung von mittels der optischen Sensoreinheiten erfassten und durch die Steuereinheit ausgewerteten Bildern.

Ein solcher Personenkraftwagen ist beispielsweise aus der US 5,670,935 A oder der US 5,949,331 A bekannt. An dem Personenkraftwagen sind Kameras angeordnet, welche den rückwärtigen Bereich sowohl neben als auch hinter dem Personenkraftwagen erfassen. Die seitliche Anordnung von entgegen der Fahrtrichtung die Umgebung erfassenden Kameras dient dazu, den sogenannten toten Winkel zu vermeiden, der dazu führen kann, dass eine Bedienperson einen benachbart fahrenden Personenkraftwagen oder einen sonstigen Verkehrsteilnehmer übersehen kann. Es werden entsprechend Bilder der von den Kameras erfassten seitlichen und rückwärtigen Umgebung mittels der Anzeigevorrichtung projiziert. Zudem können Fahrzeugparameter, wie die Fahrgeschwindigkeit oder dergleichen, angezeigt werden. Der Blick nach vorne ist bei Personenkraftwagen zumindest durch das Fahrzeug selbst unversperrt.

Kabinen von landwirtschaftlichen Arbeitsfahrzeugen (z.B. DE 10 2015 115883 A1) beispielsweise weisen in der

Eckbereichen massive Säulen auf, die das Sichtfeld einer in der Kabine befindlichen Bedienperson begrenzen. Weiterhin sind an dem landwirtschaftlichen Arbeitsfahrzeug großflächige Bauteile angeordnet, welche die Sicht aus der Kabine heraus nach vorne und zur Seite einschränken, wie beispielsweise Motorhaube, Räder oder Kotflügel. Hinzu kommen an dem landwirtschaftlichen Arbeitsfahrzeug angeordnete Arbeitsgeräte, welche die Sicht im Bereich vor dem Arbeitsfahrzeug zusätzlich einschränken. Diese die Sicht beschränkenden Elemente bilden Sichthindernisse, welche einen sicheren und effizienten Betrieb des Arbeitsfahrzeugs erschweren. Dabei wird nicht nur das Erkennen von Hindernissen oder Personen in unmittelbarer Nähe des Arbeitsfahrzeugs eingeschränkt, sondern auch das Ausführen von mit dem Arbeitsfahrzeug durchzuführender Arbeitsprozesse wird aufgrund der eingeschränkten kognitiven Wahrnehmung der Bedienperson verlangsamt. Zur Verbesserung der Wahrnehmung der Umgebung durch die Bedienperson sind entsprechende Hilfsmittel wie eine optische Sensoreinheit zur Erfassung der Umgebung der Arbeitsmaschine oder Spiegel an der Arbeitsmaschine angeordnet. Diese Blickwinkel lassen sich jedoch nicht in das natürliche Blickfeld der Bedienperson integrieren, da der Blick der Bedienperson im Wechsel zwischen den Anzeigevorrichtungen der Hilfsmittel, z.B. einer am Kabinendach angeordneten Anzeige einer Rückfahrkamera oder seitlich am Kabinendach angeordneter Spiegel, und durch die Windschutzscheibe hin und her wandert. Dies reduziert deutlich die Intuitivität der Bedienung. Zudem wird die Bedienung der Arbeitsmaschine verlangsamt und führt zu einer frühen Ermüdung bzw. abnehmenden Konzentrationsfähigkeit der Bedienperson.

Somit liegt der Erfindung die Aufgabe zugrunde, eine landwirtschaftliche Arbeitsmaschine der eingangs genannten Art weiterzubilden, welche sich durch eine sichere und effiziente Bedienung auszeichnet, indem die Bedienperson bei der Überwachung der Umgebung respektive des Arbeitsbereiches der Arbeitsmaschine entlastet wird.

Diese Aufgabe wird erfindungsgemäß durch eine landwirtschaftliche Arbeitsmaschine gemäß dem Oberbegriff des Anspruches 1 in Verbindung mit den kennzeichnenden Merkmalen gelöst.

Vorteilhafte Weiterbildungen sind Gegenstand der Unteransprüche.

Gemäß dem Anspruch 1 wird eine landwirtschaftliche Arbeitsmaschine vorgeschlagen, umfassend eine Kabine und eine Steuereinheit, wobei die Steuereinheit mit zumindest einer optischen Sensoreinheit zur Erfassung der Umgebung der Arbeitsmaschine in Wirkverbindung steht, und einer optischen Anzeigevorrichtung zur Projizierung von mittels der zumindest einen optischen Sensoreinheit erfassten und durch die Steuereinheit ausgewerteten Bildern, wobei der Kabine eine Sensoreinrichtung zugeordnet ist, welche die Lage des Blickfeldes einer Bedienperson der Arbeitsmaschine erfasst, und dass die Steuereinheit dazu eingerichtet ist, die Signale der Sensoreinrichtung auszuwerten, um die Anzeigevorrichtung anzusteuern, das angezeigte Bild an die Lage des detektierten Blickfeldes der Bedienperson anzupassen. Die Steuereinheit verwendet die Informationen der Sensoreinrichtung, um die Parallaxenverschiebung zu bestimmen. Die Bestimmung der Parallaxenverschiebung wird dazu verwendet, die Projektion der Umgebung durch die in der Kabine angeordnete optische Anzeigevorrichtung an die jeweilige Lage des Blickfeldes der Bedienperson anzupassen. Das Sichtfeld der Bedienperson wird durch die von der zumindest einen optischen Sensoreinheit erfassten Daten erweitert. Dabei wird die Projektion mittels der Bestimmung der Parallaxenverschiebung in das Blickfeld der Bedienperson eingebettet.

Hierzu kann die in der Kabine angeordnete Sensoreinrichtung die Position des Kopfes und/oder der Augen bzw. eine Pupillenbewegung der Bedienperson kontinuierlich erfassen. Hierdurch wird eine zeitnahe Anpassung des erweiterten Sichtfeldes gewährleistet.

Dabei kann der Kabine die optische Anzeigevorrichtung zugeordnet sein. Die optische Anzeigevorrichtung kann in der Kabine oder außerhalb der Kabine an der landwirtschaftlichen Arbeitsmaschine angeordnet sein. Dies ermöglicht die Projizierung von mittels der zumindest einen optischen Sensoreinheit erfassten und durch die Steuereinheit ausgewerteten Bildern sowohl von innerhalb als auch von außerhalb der Kabine.

Weiterhin kann die Steuereinheit dazu eingerichtet sein, aus den von der zumindest einen optischen Sensoreinheit erfassten Daten ein zweidimensionales oder ein dreidimensionales Umgebungsmodell zu generieren, welches durch die Anzeigevorrichtung darstellbar ist. Vorzugsweise kann die Steuereinheit dazu eingerichtet sein, die erfassten Daten in Echtzeit zu verarbeiten, so dass das Umgebungsmodell fortlaufend an sich ändernde Umgebungsbedingungen, wie das Auftreten eines statischen oder mobilen Hindernisses, das Hinzutreten einer Person in den Arbeitsbereich oder dergleichen, angepasst wird.

Insbesondere kann die Steuereinheit dazu eingerichtet sein, in das Umgebungsmodell zu einem früheren Zeitpunkt erfasste Daten einzufügen, während sich die Arbeitsmaschine entlang einer Trajektorie bewegt. Die Steuereinheit kann Bereiche des Umgebungsmodells aus vorhergehend erfassten Daten durch Berechnung rekonstruieren, die im Vorfeld der Arbeitsmaschine durch die optische Sensoreinheit aufgenommen wurden, d.h. vor dem Erreichen eines Punktes der Trajektorie durch die Arbeitsmaschine, in dem die Daten erfasst wurden. Somit kann das Umgebungsmodel am jeweiligen Punkt der Trajektorie durch Daten aufgefüllt werden, welche dann bereits außerhalb des Sichtfeldes der zumindest einen optischen Sensoreinheit liegen. Hierzu kann die Steuereinheit dazu eingerichtet sein, die durch die zumindest eine optische Sensoreinheit erfassten Daten temporär zu speichern, um diese zeitversetzt abzurufen.

Des Weiteren kann die Steuereinheit dazu eingerichtet sein, die Anzeigevorrichtung anzusteuern, um im Blickfeld befindliche sichtbehindernde Bauteile der Arbeitsmaschine semitransparent dazustellen und mit dem durch das jeweilige Bauteil verdeckten Ausschnitt des Umgebungsmodells zu überlagern. Die Bedienperson kann durch die Überlagerung somit sowohl die Bauteile als auch den durch die Bauteile verdeckten Bereich wahrnehmen. Einerseits sieht die Bedienperson weiterhin die physischen Grenzen der Arbeitsmaschine, andererseits werden die in den verdeckten Bereichen befindlichen Hindernisse oder Personen dargestellt. Dadurch wird eine präzise und sichere Bedienung der Arbeitsmaschine ermöglicht, beispielsweise beim Ankuppeln oder in Rangiersituationen. Zudem wird dadurch eine schnellere und einfachere Bedienung der Arbeitsmaschine ermöglicht, da sich die Bedienperson auf die dargestellte Projektion des Umgebungsmodells konzentrieren kann, die fortlaufend an die Lage des detektierten Blickfeldes angepasst wird. Blinde Flecken im Blickfeld der Bedienperson, wie sie durch die sichtbehindernden Bauteile der Arbeitsmaschine gegeben sind, werden vermieden. Vielmehr werden die sichtbehindernden Bauteile zumindest teilweise für eine Darstellung des Umgebungsmodells genutzt.

Gemäß einer bevorzugten Weiterbildung kann die Steuereinheit dazu eingerichtet sein, die Anzeigevorrichtung anzusteuern, um spezifische Funktionsbauteile der Arbeitsmaschine darzustellen. Funktionsbauteile der Arbeitsmaschine sind beispielsweise eine Frontkupplung, ein Frontkraftheber oder eine Frontladerschaufel. Neben der Projektion des Umgebungsmodells werden zumindest die Funktionsbauteile mittels der Anzeigevorrichtung dargestellt, welche die Bedienperson sehen sollte, um einen sicheren Betrieb der Arbeitsmaschine und der Funktionsbauteile zu gewährleisten.

Bevorzugt kann die zumindest eine optische Sensoreinheit in Hauptblickrichtung der Bedienperson ausgerichtet sein. Eine Hauptblickrichtung bildet im Allgemeinen die vom Sitz der Bedienperson aus gesehen nach vorne in Richtung der Motorhaube gerichtete Blickrichtung. Eine weitere Hauptblickrichtung bildet die vom Sitz der Bedienperson aus gesehen nach hinten gerichtete Blickrichtung bei einer Rückwärtsfahrt.

Insbesondere kann die Anzeigevorrichtung ein transparentes Display umfassen, welches in eine Kabinenscheibe der Kabine eingelassen ist. Vorzugsweise ist das transparente Display in die Frontscheibe der Arbeitsmaschine eingelassen.

Alternativ kann die Anzeigevorrichtung als Head-up-Display ausgeführt sein, welche die Bilder auf eine Kabinenscheibe projiziert. Vorzugsweise werden die Bilder auf die Frontscheibe der Kabine projiziert.

Bevorzugt kann die zumindest eine optische Sensoreinheit im Frontbereich der Arbeitsmaschine angeordnet sein. Insbesondere kann die zumindest eine optische Sensoreinheit an der Motorhaube der Arbeitsmaschine angeordnet sein.

Zusätzlich kann zumindest eine optische Sensoreinheit im Heckbereich der Arbeitsmaschine angeordnet sein. Die Steuereinheit kann dazu eingerichtet sein, zwischen der im Frontbereich und einer zusätzlich im Heckbereich der Arbeitsmaschine angeordneten optischen Sensoreinheit bei der Bestimmung des Umgebungsmodells hin und her zu schalten, wenn ein entsprechender Steuerbefehl empfangen wird. Hierzu kann von der Steuereinheit beispielsweise ein von einer Getriebesteuereinrichtung initiierter Gangwechsel detektiert werden. Entsprechend des eingelegten Ganges wird von der Anzeigevorrichtung das Umgebungsmodell projiziert, welches aufgrund von erfassten Daten der jeweils aktiven optischen Sensoreinheit bestimmt wird. Dabei werden die von der fahrtrichtungsabhängig inaktiven optischen Sensoreinheit erfassten Daten temporär von der Steuereinheit zwischengespeichert, um bei einem erneuten Richtungswechsel Basisdaten für die Bestimmung des Umgebungsmodells zur Verfügung zu haben.

Die Steuereinheit ist dazu eingerichtet, auf Basis des bestimmten Umgebungsmodells und der erfassten Position des Kopfes und/oder der Augen bzw. einer Pupillenbewegung der Bedienperson, die bildliche Darstellung zu berechnen, die von der Anzeigevorrichtung projiziert wird. Dabei ist die Steuereinheit dazu eingerichtet, einzelne Abschnitte des Umgebungsmodells zu manipulieren. Ebenso können Vergrößerung, Krümmung, Neigung und Verschiebung innerhalb des Umgebungsmodells durch die Steuereinheit manipulierbar sein, um den natürlichen Blickwinkel der Bedienperson ohne sichtbehindernde Bauteile der Arbeitsmaschine nachzuahmen.

Die vorliegende Erfindung wird nachstehend anhand eines in den Zeichnungen dargestellten Ausführungsbeispieles näher erläutert.

Es zeigen:
- Fig. 1: eine schematische Ansicht einer landwirtschaftlichen Arbeitsmaschine; und
- Fig. 2: eine exemplarische und schematische Darstellung einer durch eine Anzeigevorrichtung der Arbeitsmaschine erzeugten Projektion eines Umgebungsmodells.

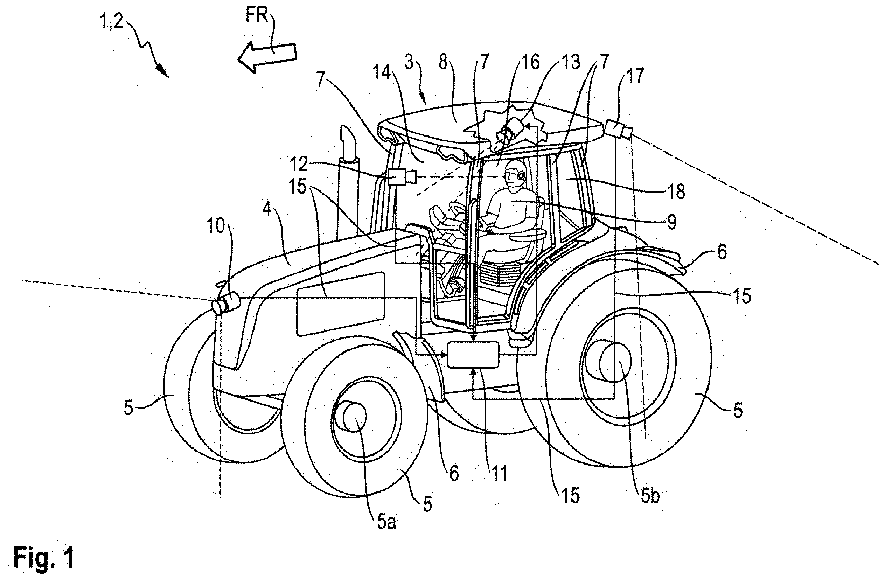

In Fig. 1 ist eine schematische Ansicht einer landwirtschaftlichen Arbeitsmaschine 1 dargestellt, die als ein Traktor 2 ausgeführt ist. Der Traktor 2 umfasst eine Kabine 3, die auf einem Chassis angeordnet ist. In Fahrtrichtung FR gesehen befindet sich vor der Kabine 3 eine Motorhaube 4. An einer Vorderachse 5a und einer Hinterachse 5b sind Räder 5 angeordnet. Die Räder 5 sind abschnittsweise durch Kotflügel 6 abgedeckt. Die Kabine 3 weist mehrere im Wesentlichen vertikal verlaufende Säulen 7 auf, an denen endseitig ein Kabinendach 8 angeordnet ist. In der Kabine 3 befindet sich eine Bedienperson 9.

An der Motorhaube 4 ist zumindest eine optische Sensoreinheit 10, insbesondere eine Kamera, zur Erfassung der in Fahrtrichtung FR gesehen vor der Arbeitsmaschine 1 bzw. dem Traktor 2 befindlichen Umgebung angeordnet. Die zumindest eine optische Sensoreinheit 10 steht durch eine Bussystem 15 mit einer Steuereinheit 11 der Arbeitsmaschine 1 in Wirkverbindung. Der Kabine 3 ist eine weitere Sensoreinrichtung 12 zugeordnet, die ebenfalls durch das Bussystem 15 mit der Steuereinheit 11 in Wirkverbindung steht. Der Kabine 3 ist eine Anzeigevorrichtung 13 zugeordnet. Die der Kabine 3 zugeordnete optische Anzeigevorrichtung 13 kann in der Kabine 3 oder außerhalb der Kabine 3 an der landwirtschaftlichen Arbeitsmaschine 1 angeordnet sein. Bei einer Anordnung in der Kabine 3 ist die Anzeigevorrichtung 13 beispielsweise in das Kabinendach 8 integriert. Am Kabinendach 8 ist optional eine zusätzliche optische Sensoreinheit 17, insbesondere eine Kamera, angeordnet, die durch das Bussystem 15 mit der Steuereinheit 11 in Wirkverbindung steht. Die optische Sensoreinheit 17 erfasst die in Fahrtrichtung FR gesehen hinter der Arbeitsmaschine 1 bzw. dem Traktor 2 befindliche Umgebung. Die von den optischen Sensoreinheiten 10 und 17 erfassten Daten werden von der Steuereinheit 11 temporär gespeichert.

Eine Frontscheibe 14 erstreckt sich im Wesentlichen über die Breite und die Höhe der Kabine 3 hinweg, wobei im mittleren Bereich der Frontscheibe 14 die Motorhaube 4 einen sichtbehindernden Abschnitt bildet. Zwischen den Säulen 7 sind vollverglaste Kabinentüren 16 sowie Seitenfenster 18 oberhalb der Kotflügel 6 angeordnet. Die Motorhaube 4, die Räder 5, die Kotflügel 6 als auch die Säulen 7 stellen sichtbehindernde Bauteile dar, welche die Wahrnehmung insbesondere der unmittelbaren Umgebung der Arbeitsmaschine 1 respektive des Traktors 2 durch die Bedienperson 9 deutlich einschränken. Je nach Größe des Traktors 2 sind insbesondere die Motorhaube 4, die Räder 5 als auch die vorderen und hinteren Kotflügel 6 geeignet, eine im Nahbereich des Traktors 2 befindliche Person oder ein Hindernis zu verdecken.

Die in der Kabine 3 angeordnete optische Anzeigevorrichtung 13 ist zur Projizierung von mittels der zumindest einen optischen Sensoreinheit 10, 17 erfassten und durch die Steuereinheit 11 ausgewerteten Bildern eingerichtet. Die Steuereinheit 11 ist dazu eingerichtet, aus den von der zumindest einen optischen Sensoreinheit 10, 17 erfassten Daten ein zweidimensionales oder dreidimensionales Umgebungsmodell zu generieren, welches durch die Anzeigevorrichtung 13 darstellbar ist. Zur Darstellung kann die Anzeigevorrichtung 13 ein transparentes Display umfassen, welches in Frontscheibe 14 der Kabine 3 eingelassen ist. Alternativ kann die Anzeigevorrichtung 13 als Head-up-Display ausgeführt sein, welche die Bilder auf die Frontscheibe 14 projiziert. Die Anordnung der Anzeigevorrichtung 13 innerhalb oder außerhalb der Kabine 3 ermöglicht die Projizierung von mittels der zumindest einen optischen Sensoreinheit 10, 17 erfassten und durch die Steuereinheit 11 ausgewerteten Bildern sowohl von innerhalb der als auch von außerhalb der Kabine 3.

Die Steuereinheit 11 ist dazu eingerichtet, aus den von der zumindest einen optischen Sensoreinheit 10 erfassten Daten ein zweidimensionales oder ein dreidimensionales Umgebungsmodell zu generieren, welches durch die Anzeigevorrichtung 13 darstellbar ist. Die Sensoreinrichtung 12, die der Kabine zugeordnet ist, erfasst die Lage des Blickfeldes der Bedienperson 9 in der Kabine 3 der Arbeitsmaschine 1. Die Steuereinheit 11 ist dazu eingerichtet ist, die Signale der Sensoreinrichtung 12 auszuwerten, um die Anzeigevorrichtung 13 anzusteuern, das auf der Frontscheibe 14 angezeigte Bild an die Lage des detektierten Blickfeldes anzupassen. Die Steuereinheit 11 verwendet die Informationen der Sensoreinrichtung 12, um die Parallaxenverschiebung zu bestimmen. Die Bestimmung der Parallaxenverschiebung wird dazu verwendet, die Projektion der Umgebung durch die in der Kabine 3 angeordnete optische Anzeigevorrichtung 13 an die jeweilige Lage des Blickfeldes der Bedienperson 9 anzupassen. Dadurch wird die scheinbare Änderung der Position eines Objektes kompensiert, wenn die Bedienperson 9 ihre eigene Position durch das Bewegen des Traktors 2 verschiebt.

Hierzu erfasst die als Kamera ausgeführte Sensoreinrichtung 12 die Position des Kopfes und/oder der Augen bzw. eine Pupillenbewegung der Bedienperson 9. Die von der Sensoreinrichtung 12 erfassten Daten werden zur Auswertung an die Steuereinheit 11 übermittelt.

Die Steuereinheit 11 ist dazu eingerichtet, auf Basis des bestimmten Umgebungsmodells und der erfassten Position des Kopfes und/oder der Augen bzw. einer Pupillenbewegung der Bedienperson 9 die bildliche Darstellung zu berechnen, die von der Anzeigevorrichtung 13 projiziert wird. Dabei ist die Steuereinheit 11 dazu eingerichtet, einzelne Abschnitte des Umgebungsmodells zu manipulieren. Ebenso können Vergrößerung, Krümmung, Neigung und Verschiebung innerhalb des Umgebungsmodells durch die Steuereinheit 11 manipulierbar sein, um den natürlichen Blickwinkel der Bedienperson 9 ohne sichtbehindernde Bauteile der Arbeitsmaschine 1 nachzuahmen.

Die Steuereinheit 11 ist des Weiteren dazu eingerichtet sein, in das Umgebungsmodell zu einem früheren Zeitpunkt erfasste Daten einzufügen, während sich die Arbeitsmaschine 1 entlang einer beliebigen Trajektorie bewegt. Die Steuereinheit 11 ist dazu eingerichtet, Bereiche des Umgebungsmodells aus vorhergehend erfassten Daten zu rekonstruieren, die im Vorfeld der Arbeitsmaschine 1 durch die Sensoreinheit 10 aufgenommen wurden. Hierbei werden vor dem Erreichen eines Punktes der abgefahrenen Trajektorie durch die Arbeitsmaschine 1, in dem die Daten vorab bereits von der Sensoreinheit 10 erfasst wurden. Somit kann das Umgebungsmodel am jeweiligen Punkt der Trajektorie durch Daten aufgefüllt werden, welche dann bereits außerhalb des Sichtfeldes des zumindest einen optischen Sensoreinheit 10 liegen.

Weiterhin ist die Steuereinheit 11 dazu eingerichtet, die Anzeigevorrichtung 13 anzusteuern, um im Blickfeld befindliche sichtbehindernde Bauteile, wie Motorhaube 4, Räder 5 oder Kotflügel 6, der Arbeitsmaschine 1 semitransparent dazustellen und mit dem durch das jeweilige Bauteil verdeckten Ausschnitt des Umgebungsmodells zu überlagern. Die Bedienperson 9 kann durch die Überlagerung somit sowohl die Bauteile als auch den durch die Bauteile verdeckten Bereich wahrnehmen. Einerseits sieht die Bedienperson 9 weiterhin die physischen Grenzen der Arbeitsmaschine 1, andererseits werden die in den verdeckten Bereichen befindlichen Hindernisse oder Personen dargestellt. Dadurch wird eine präzise und sichere Bedienung der Arbeitsmaschine 1 ermöglicht, beispielsweise beim Ankuppeln oder in Rangiersituationen. Zudem wird dadurch eine schnellere und einfachere Bedienung der Arbeitsmaschine 1 ermöglicht, da sich die Bedienperson 9 auf die dargestellte Projektion des Umgebungsmodells konzentrieren kann, die fortlaufend an die Lage des detektierten Blickfeldes angepasst wird. Blinde Flecken im Blickfeld der Bedienperson 9, wie sie durch die sichtbehindernden Bauteile der Arbeitsmaschine 1 gegeben sind, werden vermieden. Vielmehr werden die sichtbehindernden Bauteile zumindest teilweise für eine Darstellung des Umgebungsmodells genutzt.

Darüber hinaus kann die Steuereinheit 11 dazu eingerichtet sein, die Anzeigevorrichtung 13 anzusteuern, um spezifische Funktionsbauteile der Arbeitsmaschine 1, wie eine Frontkupplung, einen Frontkraftheber oder eine Frontladerschaufel, darzustellen. Neben der Projektion des Umgebungsmodells werden zumindest die Funktionsbauteile mittels der Anzeigevorrichtung 13 dargestellt, welche die Bedienperson 9 sehen sollte, um einen sicheren Betrieb der Arbeitsmaschine 1 zu gewährleisten.

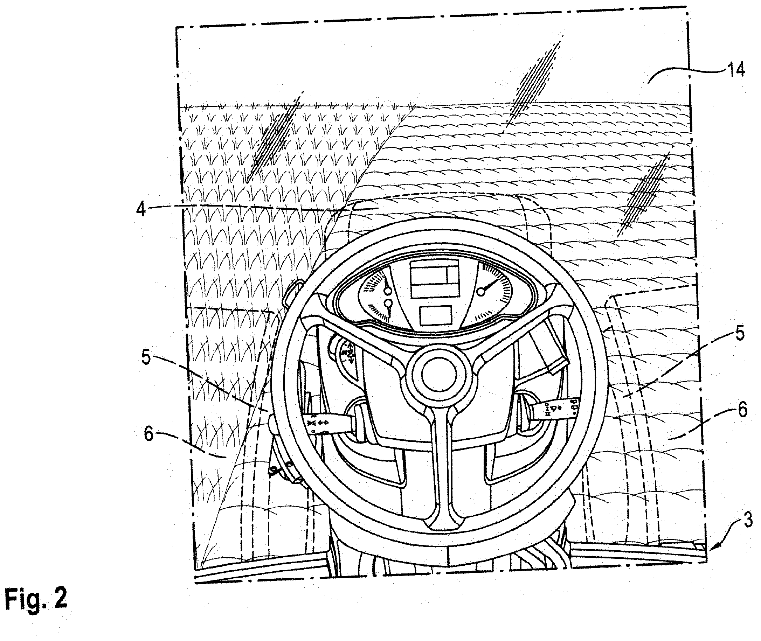

In Fig. 2 ist eine exemplarische und schematische Darstellung einer durch die Anzeigevorrichtung 13 der Arbeitsmaschine 1 erzeugten Projektion eines Umgebungsmodells gezeigt. Die Steuereinheit 11 ist dazu eingerichtet, aus den von der zumindest einen optischen Sensoreinheit 10 erfassten Daten ein zweidimensionales oder ein dreidimensionales Umgebungsmodell zu generieren, welches durch die Anzeigevorrichtung 13 darstellbar ist. Hierzu verarbeitet die Steuereinheit 11 die durch die Sensoreinheit 10 erfassten Daten in Echtzeit, so dass das Umgebungsmodell fortlaufend an sich ändernde Umgebungsbedingungen, wie das Auftreten eines statischen oder mobilen Hindernisses, das Hinzutreten einer Person in den Arbeitsbereich der Arbeitsmaschine 1 oder dergleichen, angepasst wird.

Zur Veranschaulichung der Überlagerung der im Blickfeld befindlichen sichtbehindernden Bauteile, wie Motorhaube 4, Räder 5 oder Kotflügel 6, der Arbeitsmaschine 1 mit dem durch das jeweilige Bauteil verdeckten Ausschnitt des Umgebungsmodells sind die sichtbehindernden Bauteile strichliniert dargestellt. Somit steht der Bedienperson 9 eine größere sichtbare Fläche zur Verfügung, wodurch zugleich der aus den sichtbehindernden Bauteilen resultierende tote Winkel beziehungsweise verdeckte Sichtbereich vermieden wird.

### Bezugszeichenliste

- 1: Arbeitsmaschine
- 2: Traktor
- 3: Kabine
- 4: Motorhaube
- 5: Rad
- 5a: Vorderachse
- 5b: Hinterachse
- 6: Kotflügel
- 7: Säule
- 8: Kabinendach
- 9: Bedienperson
- 10: Optische Sensoreinheit
- 11: Steuereinheit
- 12: Sensoreinrichtung
- 13: Anzeigevorrichtung
- 14: Frontscheibe
- 15: Bussystem
- 16: Kabinentür
- 17: Optische Sensoreinheit
- 18: Seitenfenster
- FR: Fahrtrichtung

## Patentansprüche

1. Landwirtschaftliche Arbeitsmaschine (1, 2), umfassend eine Kabine (3) und eine Steuereinheit (11), wobei die Steuereinheit (11) mit zumindest einer optischen Sensoreinheit (10, 17) zur Erfassung der Umgebung der Arbeitsmaschine (1) in Wirkverbindung steht, und einer optischen Anzeigevorrichtung (13) zur Projizierung von mittels der zumindest einen optischen Sensoreinheit (10, 17) erfassten und durch die Steuereinheit (11) ausgewerteten Bildern, **dadurch gekennzeichnet, dass** der Kabine (3) eine Sensoreinrichtung (12) zugeordnet ist, welcher die Lage des Blickfeldes einer Bedienperson (9) der Arbeitsmaschine (1) erfasst, und dass die Steuereinheit (11) dazu eingerichtet ist, die Signale der Sensoreinrichtung (12) auszuwerten, um die Anzeigevorrichtung (13) anzusteuern, das angezeigte Bild an die Lage des detektierten Blickfeldes der Bedienperson (9) anzupassen.

2. Landwirtschaftliche Arbeitsmaschine (1) nach Anspruch 1, **dadurch gekennzeichnet, dass** die Sensoreinrichtung (12) die Position des Kopfes und/oder der Augen bzw. eine Pupillenbewegung der Bedienperson (9) kontinuierlich erfasst.

3. Landwirtschaftliche Arbeitsmaschine (1) nach Anspruch 1 oder 2, **dadurch gekennzeichnet, dass** die Steuereinheit (11) dazu eingerichtet ist, aus den von der zumindest einen optischen Sensoreinheit (10, 17) erfassten Daten ein zweidimensionales oder ein dreidimensionales Umgebungsmodell zu generieren, welches durch die Anzeigevorrichtung (13) darstellbar ist.

4. Landwirtschaftliche Arbeitsmaschine (1) nach Anspruch 3, **dadurch gekennzeichnet, dass** die Steuereinheit (11) dazu eingerichtet ist, in das Umgebungsmodell zu einem früheren Zeitpunkt erfasste Daten einzufügen, während sich die Arbeitsmaschine (1) entlang einer Trajektorie bewegt.

5. Landwirtschaftliche Arbeitsmaschine (1) nach einem der Ansprüche 1 bis 4, **dadurch gekennzeichnet, dass** die Steuereinheit (11) dazu eingerichtet ist, die Anzeigevorrichtung (13) anzusteuern, um im Blickfeld befindliche sichtbehindernde Bauteile (4, 5, 6) der Arbeitsmaschine (1) semitransparent dazustellen und mit dem durch das jeweilige Bauteil (4, 5, 6) verdeckten Ausschnitt des Umgebungsmodells zu überlagern.

6. Landwirtschaftliche Arbeitsmaschine (1) nach einem der Ansprüche 1 bis 5, **dadurch gekennzeichnet, dass** die Steuereinheit (11) dazu eingerichtet ist, die Anzeigevorrichtung (13) anzusteuern, um spezifische Funktionsbauteile der Arbeitsmaschine (1) darzustellen.

7. Landwirtschaftliche Arbeitsmaschine (1) nach einem der Ansprüche 1 bis 6, **dadurch gekennzeichnet, dass** die zumindest eine optische Sensoreinheit (10) in Hauptblickrichtung der Bedienperson (9) ausgerichtet ist.

8. Landwirtschaftliche Arbeitsmaschine (1) nach einem der Ansprüche 1 bis 7, **dadurch gekennzeichnet, dass** die Anzeigevorrichtung (13) ein transparentes Display umfasst, welches in eine Kabinenscheibe (14) der Kabine (3) eingelassen ist.

9. Landwirtschaftliche Arbeitsmaschine (1) nach einem der Ansprüche 1 bis 7, **dadurch gekennzeichnet, dass** die Anzeigevorrichtung (13) als Head-up-Display ausgeführt ist, welche die Bilder auf eine Kabinenscheibe (14) projiziert.

10. Landwirtschaftliche Arbeitsmaschine (1) nach einem der Ansprüche 1 bis 9, **dadurch gekennzeichnet, dass** die zumindest eine optische Sensoreinheit (10) im Frontbereich der Arbeitsmaschine (1) angeordnet ist.

11. Landwirtschaftliche Arbeitsmaschine (1) nach einem der Ansprüche 1 bis 10, **dadurch gekennzeichnet, dass** zumindest eine optische Sensoreinheit (17) im Heckbereich der Arbeitsmaschine (1) angeordnet ist.

## Claims

1. An agricultural working machine (1, 2) comprising a cabin (3) and a control unit (11), wherein the control unit (11) is operatively connected to at least one optical sensor unit (10, 17) in order to detect the environment of the working machine (1), and an optical display device (13) for projecting images detected by means of the at least one optical sensor unit (10, 17) and analysed by the control unit (11), **characterized in that** a sensor device (12) is associated with the cabin (3) and detects the position of the field of vision of an operative (9) of the working machine (1), and **in that** the control unit (11) is configured to analyse the signals from the sensor device (12) in order to command the display device (13) to adapt the displayed image to the position of the detected field of vision of the operative (9).

2. The agricultural working machine (1) according to claim 1, **characterized in that** the sensor device (12) continuously detects the position of the head and/or the eyes or a movement of the pupils of the operative (9).

3. The agricultural working machine (1) according to claim 1 or claim 2, **characterized in that** the control unit (11) is configured to generate a two-dimensional or a three-dimensional model of the environment from the data acquired by the at least one optical sensor unit (10, 17), which model can be presented via the display device (13).

4. The agricultural working machine (1) according to claim 3, **characterized in that** the control unit (11) is configured to insert data acquired at an earlier point in time into the model of the environment while the working machine (1) moves along a trajectory.

5. The agricultural working machine (1) according to one of claims 1 to 4, **characterized in that** the control unit (11) is configured to command the display device (13) to display components (4, 5, 6) of the working machine (1) which obstruct the view in the field of vision semi-transparently and to overlay them on the section of the model of the environment hidden by the respective component (4, 5, 6).

6. The agricultural working machine (1) according to one of claims 1 to 5, **characterized in that** the control unit (11) is configured to command the display device (13) to display specific functional components of the working machine (1).

7. The agricultural working machine (1) according to one of claims 1 to 6, **characterized in that** the at least one optical sensor unit (10) is orientated in the main direction of view of the operative (9).

8. The agricultural working machine (1) according to one of claims 1 to 7, **characterized in that** the display device (13) comprises a transparent display which is inserted into a cabin window (14) of the cabin (3).

9. The agricultural working machine (1) according to one of claims 1 to 7, **characterized in that** the display device (13) is configured as a heads-up display which projects the images onto a cabin window (14).

10. The agricultural working machine (1) according to one of claims 1 to 9, **characterized in that** the at least one optical sensor unit (10) is disposed in the front region of the working machine (1).

11. The agricultural working machine (1) according to one of claims 1 to 10, **characterized in that** at least one optical sensor unit (17) is disposed in the rear region of the working machine (1).

## Revendications

1. Machine de travail agricole (1, 2), comprenant une cabine (3) et une unité de commande (11), l'unité de commande (11) étant en liaison active avec au moins une unité de capteur optique (10, 17), destinée à la détection de l'environnement de la machine de travail (1), et avec un dispositif d'affichage optique (13) destiné à la projection d'images recueillies à l'aide de l'unité de capteur optique (10, 17), au nombre d'au moins une, et évaluées par l'unité de commande (11), **caractérisée en ce qu'**un dispositif capteur (12) est associé à la cabine (3) et détecte la position du champ de vision d'un opérateur (9) de la machine agricole (1), et **en ce que** l'unité de commande (11) est conçue pour évaluer les signaux de commande du dispositif capteur (12) aux fins d'activer le dispositif d'affichage (13) pour adapter l'image affichée à la position du champ de vision détecté de l'opérateur (9).

2. Machine de travail agricole (1) selon la revendication 1, **caractérisée en ce que** le dispositif capteur (12) détecte en continu la position de la tête et/ou des yeux ou un mouvement des pupilles de l'opérateur (9).

3. Machine de travail agricole (1) selon la revendication 1 ou 2, **caractérisée en ce que** l'unité de commande (11) est conçue pour générer, à partir des données recueillies par l'unité de capteur optique (10, 17), au nombre d'au moins une, un modèle de l'environnement en deux ou trois dimensions, qui peut être représenté par le dispositif d'affichage (13).

4. Machine de travail agricole (1) selon la revendication 3, **caractérisée en ce que** l'unité de commande (11) est conçue pour insérer dans le modèle de l'environnement, des données recueillies à un instant antérieur, pendant que la machine agricole (1) se déplace le long d'une trajectoire.

5. Machine de travail agricole (1) selon l'une des revendications 1 à 4, **caractérisée en ce que** l'unité de commande (11) est conçue pour activer le dispositif d'affichage (13) aux fins de représenter de manière semi-transparente des éléments (4, 5, 6) de la machine agricole (1) se trouvant dans le champ de vision et gênant la vue, et de leur superposer la partie du modèle d'environnement qui est masquée par l'élément (4, 5, 6) concerné.

6. Machine de travail agricole (1) selon l'une des revendications 1 à 5, **caractérisée en ce que** l'unité de commande (11) est conçue pour activer le dispositif d'affichage (13) aux fins de représenter des éléments fonctionnels spécifiques de la machine agricole (1).

7. Machine de travail agricole (1) selon l'une des revendications 1 à 6, **caractérisée en ce que** l'unité de capteur optique (10), au nombre d'au moins une, est orientée dans la direction principale du regard de l'opérateur (9).

8. Machine de travail agricole (1) selon l'une des revendications 1 à 7, **caractérisée en ce que** le dispositif d'affichage (13) comprend un moyen de visualisation transparent qui est intégré dans une vitre (14) de la cabine (3).

9. Machine de travail agricole (1) selon l'une des revendications 1 à 7, **caractérisée en ce que** le dispositif d'affichage (13) est réalisé sous forme d'affichage tête haute qui projette les images sur une vitre de cabine (14).

10. Machine de travail agricole (1) selon l'une des revendications 1 à 9, **caractérisée en ce que** l'unité de capteur optique (10), au nombre d'au moins une, est disposée dans la région frontale de la machine de travail (1).

11. Machine de travail agricole (1) selon l'une des revendications 1 à 10, **caractérisée en ce qu'**au moins une unité de capteur optique (17) est disposée dans la région arrière de la machine agricole (1).
